# FASCICULE DE BREVET EUROPEEN

(11) **EP 1 427 231 B1**
(45) Date de publication et mention de la délivrance du brevet: **31.08.2011**
(21) Numéro de dépôt: 03292822.8
(22) Date de dépôt: 14.11.2003
(51) Int. Cl.: H04L 29/06, H04W 12/06

(54) **Procédé d'établissement et de gestion d'un modèle de confiance entre une carte à puce et un terminal radio**
Verfahren zur Herstellung und Verwaltung eines Vertrauensmodells zwischen einer SIM-Karte und einem mobilen Terminal
Method of establishing and managing a confidence model between a SIM-card and a mobile terminal

(30) Priorité: 22.11.2002 FR 0214669
(43) Date de publication de la demande: 09.06.2004
(73) Titulaire: Société Française du Radiotéléphone-SFR, 75008 Paris (FR)
(72) Inventeur: Bensimon, Michael, 38100 Grenoble (FR); Caloud, Philippe, 38330 Saint-Ismier (FR); Pothin, Cédric, 38000 Grenoble (FR); Prunel, Nicolas,, 38000 Grenoble (FR)
(74) Mandataire: Debay, Yves

(56) Documents cités:
- EP-A- 1 331 752
- WO-A-00/02358
- WO-A-01/98903
- WO-A-97/24831
- PARK CH-S: "ON CERTIFICATE-BASED SECURITY PROTOCOLS FOR WIRELESS MOBILE COMMUNICATION SYSTEMS" IEEE NETWORK, IEEE INC. NEW YORK, US, vol. 11, no. 5, 1 septembre 1997 (1997-09-01), pages 50-55, XP000699941 ISSN: 0890-8044

## Description

La présente invention concerne le domaine de la radiotéléphonie mobile. La présente invention concerne plus particulièrement un procédé permettant d'établir une relation de confiance entre un terminal de radiocommunication et une carte à puce de type SIM ou équivalent, afin de sécuriser les échanges entre carte et terminal.

Dans ce qui suit, on entendra par terminal tout équipement émetteur récepteur portatif, portable, susceptible de fonctionner sur un réseau de radiotéléphonie mobile tel que GSM, GPRS, UMTS et tout type de réseau analogue, par exemple WLAN. L'invention est destinée aux téléphones mobiles dotés d'une carte à puce, par exemple une carte de type SIM, et se rapporte notamment à la distribution de contenus sécurisés pour les téléphones mobiles.

Dans l'art antérieur, le problème de la sécurisation des échanges et des infrastructures de traitement de l'information a été abordé depuis longtemps. Jusqu'à présent, de nombreuses solutions ont été proposées, qui reposent sur des technologies de cryptographie connues. L'infrastructure de gestion de clés publiques en particulier (PKI pour "Public Key Infrastructure") est la solution reposant sur des technologies de clés asymétriques (publique Kp, privée Ks) qui est la plus développée. Une clé publique Kp correspond à une suite de chiffres utilisée pour chiffrer ou déchiffrer un message transmis entre un émetteur et un récepteur et associé à une clé secrète appairée, appelée également clé privée Ks. Le message peut ainsi être chiffré par une clé publique, connue d'un ensemble d'utilisateurs, et déchiffré par une clé secrète connue du seul récepteur ou inversement chiffré par une clé privée Ks et déchiffré par la clé publique. Tandis que le chiffrement par clé publique Kp assure la confidentialité du message, le chiffrement par clé privée Ks en assure l'intégrité.

Cette solution repose en fait sur l'idée que l'initialisation d'un échange sécurisé ou d'un accès à un contenu sécurisé, repose sur l'utilisation de clés de cryptage publiques Kp, garantissant que seul le détenteur de la clé privée Ks associée pourra décrypter le message, et de certificats associant de manière sûre l'identité du partenaire à la clé publique Kp, car certifiée (cryptée par clé privée Ks) par une autorité de certification AUC (sigle pour "Authentification Centre").

De manière connue, le centre d'authentification AUC assure l'authentification des abonnés et participe à la confidentialité des données transitant dans l'interface radio entre le terminal mobile et la station de base auquel il est rattaché à un instant donné.

Néanmoins, la solution susmentionnée n'est pas entièrement sûre. Ainsi, l'initialisation du processus d'authentification est un point faible car il y a beaucoup d'autorités de certification dont les politiques de certification n'ont absolument pas le même degré de sûreté. L'utilisateur lambda n'a pas connaissance de cela et ne sait pas par exemple qu'il peut être très risqué d'accepter des certificats certifiés par certaines autorités.

L'article rédigé par Chang-Seop Park et intitulé « *On Certificate-Based Security Protocols for Wireless Mobile Communication Systems*» propose un exemple de protocole d'échange de clé authentifiée de session qui se base sur un certificat dont la validité est limitée dans le temps. Ce protocole est basé sur des systèmes de cryptage à clé publiques connus comme par exemple les racines carrés modulaires ou les systèmes mis en place par Rivest, Shamir et Adleman. Les certificats basés sur ces systèmes permettent d'une part un fonctionnement sur des téléphones mobiles dont les capacités informatiques sont restreintes et d'autre part de s'affranchir du contact avec un élément du réseau tant que le certificat reste valide. Cette solution présente cependant l'inconvénient de ne fonctionner que lors de la période de validité du certificat.

Par ailleurs, le stockage des clés privées Ks s'avère problématique, surtout dans le cas où il peut être de l'intérêt de l'utilisateur de connaître cette clé pour avoir accès à du contenu protégé. La protection de contenu contre le piratage doit en effet être adaptée dans le cas où "l'attaquant" n'est pas extérieur, mais est typiquement l'utilisateur lui-même. Les solutions existantes ne prennent pas en compte cette possibilité.

Il est prévu dans l'art antérieur, à cause des failles de sécurité, une politique de révocation de terminaux mobiles mais celle-ci est en pratique difficile à mettre en oeuvre.

Il est également connu dans l'art antérieur l'accès à du contenu protégé par des droits d'accès, par exemple avec des technologies de type DRM ("Digital Rights Management"). Le principe général du DRM consiste à fournir à l'utilisateur un contenu crypté ainsi qu'une licence d'utilisation. Cette licence comporte les droits d'usage ainsi qu'une clé associée permettant de décrypter le contenu. Afin que cette clé associée, généralement symétrique, ne soit pas accessible pour l'utilisateur, la licence est soit, envoyée par un canal qui permet «d'empêcher» l'utilisateur de lire la clé associée ainsi que de transmettre la licence soit, la clé associée est cryptée. Les solutions DRM actuellement proposées reposent sur l'usage d'une clé symétrique ou d'une biclé asymétrique se trouvant en dur dans le terminal. Cette autre clé permet de crypter ladite clé associée à la licence ou de générer une ou plusieurs clés dites diversifiées pour le cryptage de la clé associée à la licence. Des mécanismes sont mis en place au niveau du terminal pour assurer que ladite clé de décryptage de la licence, tout comme la clé contenue dans la licence elle-même, puissent être connues par le terminal mais pas par l'utilisateur.

Dans les solutions actuelles de protection d'un contenu, le code IMEI d'identité propre au terminal mobile ("International Mobile Equipement Identity") sert à l'établissement d'un modèle de confiance entre d'une part la carte SIM ou USIM (pour les réseaux dits de troisième génération), et d'autre part le terminal mobile. Théoriquement, le terminal mobile possède un code IMEI unique et la plupart des méthodes envisagées consistent à indiquer à la carte SIM un code IMEI avec lequel la carte (U)SIM peut avoir une relation de confiance.

Un inconvénient majeur de ces méthodes est que le code IMEI n'est pas un numéro secret. Il est aisé, depuis par exemple un PC avec un lecteur de carte à puce, de renvoyer le code IMEI de confiance à la carte (U)SIM et donc d'établir un modèle de confiance entre un PC et une carte (U)SIM. De plus, dans beaucoup de téléphones mobiles actuels, le code IMEI se modifie aisément. Ainsi, il est également possible de modifier l'IMEI d'un terminal mobile qui, a priori, n'est pas de confiance pour lui substituer la valeur d'un IMEI de confiance.

Par conséquent, les droits d'usage d'un contenu sécurisé sont ainsi associés à un terminal mobile et non à un individu. Afin de pouvoir associer les droits d'usage à un utilisateur, il existe dès lors un besoin de mieux appréhender la sécurisation entre la carte SIM et le terminal dans la mesure où le terminal n'est pas protégé contre les manipulations et dans la mesure où celui-ci ne peut pas être authentifié par la carte (U)SIM ou d'autres moyens difficiles à détourner.

De plus, dans les technologies de type DRM, si une clé telle que ladite biclé est répudiée ou expire, alors le terminal ne pourra plus être utilisé, aucun mécanisme de réinitialisation n'étant prévu. Par ailleurs une répudiation éventuelle de la biclé nécessite une détection très hypothétique de contenu protégé qui aurait été fourni au terminal et qui aurait été retrouvé non protégé, par exemple sur Internet.

Un objet de la présente invention est donc d'établir et gérer un modèle de confiance entre un terminal de radiocommunication et une carte à puce de type SIM ou équivalent.

La présente invention a pour objet de supprimer un ou plusieurs des inconvénients de l'art antérieur en définissant un procédé permettant de sécuriser les échanges entre une carte SIM et un terminal, dans lequel l'opérateur d'un réseau de radiotéléphonie mobile se substitue aux autorités de certification, ce procédé permettant d'établir une relation sécurisée et révocable entre la carte SIM ou USIM et un terminal authentifié fonctionnellement par le réseau, ce procédé permettant également, pour les technologies de type DRM, de stocker ladite biclé de manière sûre dans la carte SIM ou USIM.

A cet effet, l'invention concerne un procédé d'établissement et de gestion d'un modèle de confiance entre un module d'identité et un terminal radio, caractérisé en ce qu'il comporte :
- -: une étape d'authentification du terminal par ledit module d'identité, ladite étape d'authentification étant réalisée par l'intermédiaire de moyens d'authentification fournis, soit audit module d'identité par un réseau de radiotéléphonie mobile lors d'une étape dite d'initialisation ou analogue ou lors d'une étape dite de mise à jour, soit audit terminal par le module d'identité,
- -: une étape de contrôle par ledit module d'au moins une caractéristique spécifique du terminal, ladite caractéristique spécifique étant préalablement transmise par radiotéléphonie audit module, depuis un serveur sécurisé dudit réseau de radiotéléphonie mobile.

Selon une autre particularité de l'invention, la durée de vie desdits moyens d'authentification du terminal présents dans le module d'identité est limitée par une échéance déterminée, lesdits moyens d'authentification étant constitués d'au moins une clé d'authentification.

Selon une autre particularité de l'invention, ledit module d'identité est une carte à puce de type SIM ou une carte USIM pour réseaux de troisième génération ou une carte équivalente comportant dans une mémoire des données représentatives d'abonnement.

Selon une autre particularité de l'invention, le module d'identité maintient une relation de confiance avec le terminal radio en générant des moyens d'authentification puis en fournissant ces moyens d'authentification au terminal radio grâce à des mécanismes d'échange sécurisés et reposant sur des moyens d'authentification initialement disponibles du terminal radio.

L'invention permet donc une mise à disposition de fonctions de sécurité et de stockage sécurisé de données dans une carte SIM ou USIM et l'établissement d'un modèle de confiance entre le terminal et cette carte. Les différents acteurs du monde des télécommunications ont de plus en plus tendance à privilégier la relation entre un terminal mobile et la carte (U)SIM pour que cette dernière lui fournisse des fonctions de sécurité. Ces fonctions peuvent être des fonctions de cryptographie, de porte-monnaie électronique ou encore des fonctions de stockage et d'accès à des données.

Selon une autre particularité, le procédé selon l'invention comporte lors de ladite étape d'initialisation ou de mise à jour une étape de génération, réalisée au moins par ledit module d'identité, d'une clé dite de confiance, ladite clé de confiance étant utilisée par ledit module pour crypter au moins des données échangées entre le module d'identité et le terminal.

Selon une autre particularité de l'invention, ladite étape d'initialisation desdits moyens d'authentification est effectuée, à l'initiative du réseau de radiotéléphonie, après une répudiation de clé initiée par ledit module ou le réseau de radiotéléphonie mobile ou le terminal radio, une expiration de la durée de validité de clé ou bien lors de l'initialisation du module d'identité.

Selon une autre particularité, ladite étape d'authentification comprend notamment les étapes suivantes :
- -: une étape d'utilisation dans le terminal d'au moins une première clé d'authentification mémorisée dans le terminal par au moins un premier algorithme d'authentification mémorisé dans le terminal, ladite première clé ayant une durée de validité limitée par une échéance déterminée,
- -: une étape d'utilisation par le module d'identité d'au moins une deuxième clé mémorisée dans le module d'identité par au moins un deuxième algorithme d'authentification mémorisé dans le module d'identité, ladite deuxième clé étant identique ou complémentaire de la première clé et associée au terminal, ladite deuxième clé ayant une durée de validité limitée par ladite échéance déterminée,
- -: une étape de comparaison dans le module d'identité des résultats obtenus par lesdits premier et second algorithmes.

Selon une autre particularité, l'étape d'authentification comprend l'utilisation de la dite échéance déterminée.

Selon une autre particularité, ladite étape d'initialisation est initiée par un réseau de radiotéléphonie mobile et comporte également :
- -: la génération par le module d'identité d'au moins une desdites première et seconde clés,
- -: une mémorisation dans le module d'identité de ladite seconde clé,
- -: une transmission au terminal, par le module d'identité, de ladite première clé, cette première clé étant cryptée par l'intermédiaire de la clé de confiance.

Selon une autre particularité, ladite étape de comparaison est effectuée entre d'une part une réponse produite par ledit premier algorithme, mémorisée dans le terminal et transmise audit module d'identité et d'autre part un résultat de réponse, mémorisé dans le module d'identité, produit par ledit second algorithme.

Selon une autre particularité, ladite première clé peut être une clé privée Ks asymétrique, ladite seconde clé étant une clé publique Kp complémentaire de la première clé.

Selon une autre particularité, ladite première clé peut être symétrique, ladite seconde clé mémorisée dans le module d'identité étant identique à la première, ces clés formant une seule clé symétrique d'authentification.

Selon une autre particularité, le procédé selon l'invention comprend une étape de mise à jour desdites première et seconde clés, initiée par le module d'identité avant ladite échéance déterminée, ladite mise à jour incluant les étapes suivantes :
- -: authentification entre le terminal et le module d'identité à l'aide desdites première et seconde clés,
- -: génération par un algorithme d'actualisation du module d'identité d'au moins une clé actualisée prenant en compte une information pour remplacer au moins l'une desdites première et seconde clés,
- -: mémorisation dans le module d'identité de la clé actualisée pour remplacer ladite seconde clé,
- -: transmission au terminal par le module d'identité de la clé actualisée analogue de ladite première clé.

Selon une autre particularité, ladite mise à jour comprend en outre le contrôle d'au moins un identifiant du terminal et/ou du module d'identité.

Selon une autre particularité, un cryptage de clé est réalisé pour ladite transmission au terminal de la clé actualisée analogue de la première clé, ledit cryptage de clé étant effectué par ladite clé de confiance.

Selon une autre particularité, la mise à jour comprend également les étapes suivantes :
- -: génération par le module d'identité d'une nouvelle clé de confiance, après ladite authentification entre terminal et module,
- -: mémorisation dans le module d'identité de la nouvelle clé de confiance,
- -: transmission au terminal par le module d'identité de la clé de confiance nouvellement générée.

Selon une autre particularité, ladite mise à jour s'achève par un essai de vérification comprenant une transmission en retour de la part du terminal d'au moins une donnée représentative de la bonne réception des informations transmises par le module d'identité lors de la mise à jour.

Selon une autre particularité, ladite clé de confiance est une clé de chiffrement/déchiffrement symétrique analogue ou identique à ladite clé symétrique d'authentification.

Selon une autre particularité, ladite clé de confiance est une clé de session effaçable.

Selon une autre particularité, une étape dite de révocation est réalisée sur l'initiative du module d'identité, du terminal ou du réseau de radiotéléphonie correspondant, ladite étape de révocation comprenant l'effacement dans une mémoire dudit module d'identité d'au moins ladite première clé associée au terminal.

Un autre but de l'invention est d'apporter une solution à un ou plusieurs des problèmes rencontrés dans l'art antérieur en définissant un module d'identité pour la mise en oeuvre du procédé selon l'invention

Ce but est atteint par un module d'identité dans un terminal pour la mise en oeuvre du procédé selon l'invention, caractérisé en ce qu'il comprend des moyens pour mémoriser au moins une clé d'authentification ainsi qu'au moins un algorithme d'authentification, des moyens de calcul pour exécuter au moins une étape consistant à appliquer ladite clé d'authentification audit algorithme d'authentification mémorisé dans le module d'identité, des moyens de communication, des moyens d'initier une révocation et des moyens de révocation pour révoquer ladite clé d'authentification, des moyens de mémorisation d'une caractéristique spécifique du terminal et des moyens d'activation d'un algorithme d'actualisation de ladite clé d'authentification, les moyens de communication étant aptes à fournir au moins une clé d'authentification au terminal et à recevoir des données issues d'un serveur sécurisé d'un réseau de radiotéléphonie mobile.

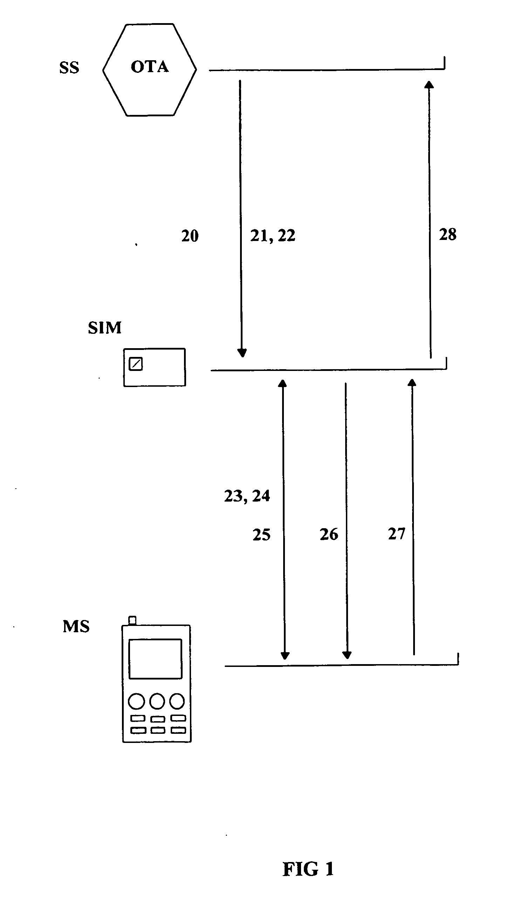

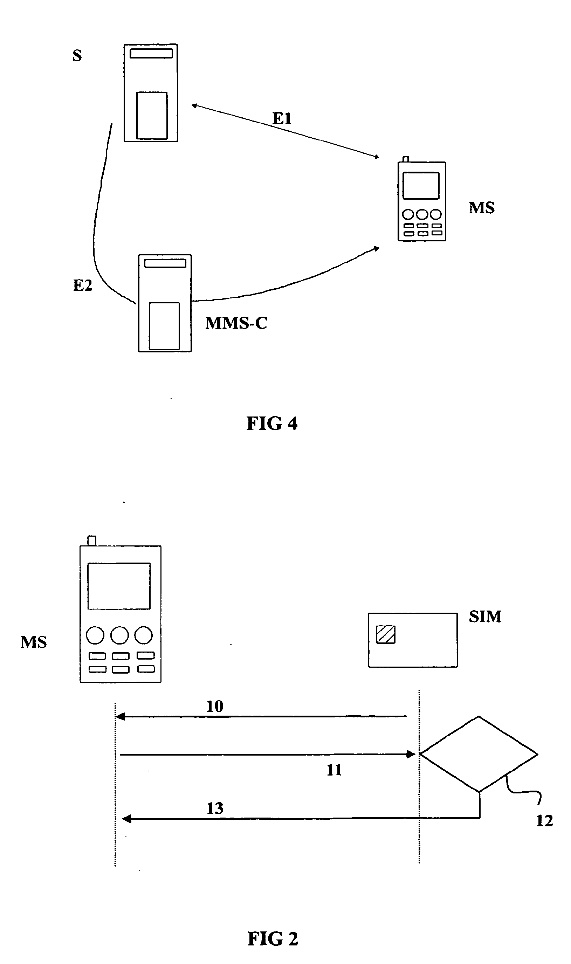

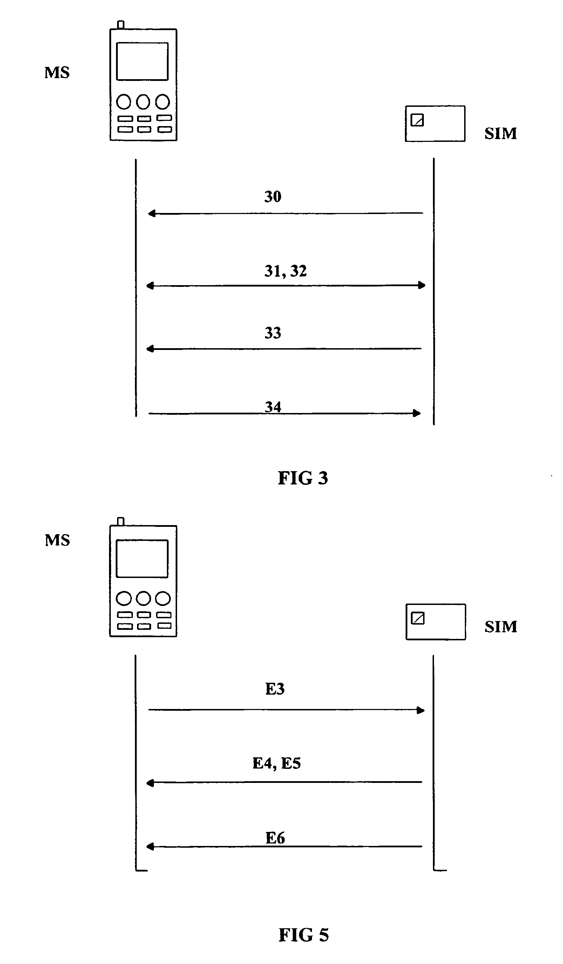

L'invention, avec ses caractéristiques et avantages, ressortira plus clairement à la lecture de la description faite en référence aux dessins annexés donnés à titre d'exemples non limitatifs dans lesquels :
- -: la figure 1 représente schématiquement le processus d'initialisation mis en oeuvre dans l'invention,
- -: la figure 2 représente de manière schématique une authentification du terminal auprès du module d'identité dans le procédé selon l'invention,
- -: la figure 3 représente un exemple de processus mis en oeuvre dans l'invention pour la mise à jour d'une clé partagée par le terminal et le module d'identité,
- -: la figure 4 représente schématiquement le principe de fonctionnement exploité pour les technologies de type DRM dans l'art antérieur,
- -: la figure 5 représente un exemple de problématique rencontrée dans l'art antérieur dans un cas DRM lorsqu'il n'existe pas de modèle de confiance entre le terminal et la carte SIM.

De manière spécifique dans le domaine de la téléphonie mobile, trois éléments interviennent. Un premier élément, le terminal (MS), réalise des fonctions d'accès, de stockage et de communication d'une information sécurisée. Un deuxième élément, le module d'identité (SIM), permet d'identifier l'utilisateur et permet de stocker des données confidentielles. Un troisième élément enfin, le réseau, peut communiquer à travers le terminal (MS) de manière sécurisée avec le module d'identité (SIM). Dans un mode de réalisation de l'invention, le module d'identité (SIM) est une carte à puce, par exemple de type SIM, USIM pour réseaux de troisième génération ou de type équivalent, comportant dans une mémoire des données représentatives d'abonnement, un microprocesseur et un programme de fonctionnement réalisant les fonctions explicitées ci-après.

Le module d'identité (SIM) peut comporter des moyens de communication lui permettant de communiquer à la fois avec le terminal et avec un serveur sécurisé (SS) du réseau. Dans des variantes, le terminal (MS) utilisé peut être construit pour se comporter de façon transparente lorsqu'il réceptionne un message spécifique du type paquet de commande sécurisé, envoyé du serveur sécurisé (SS) à destination du module d'identité (SIM). Par exemple, le serveur sécurisé (SS) peut envoyer un SMS avec une adresse spécifiant comme destination le module (SIM), par l'intermédiaire de moyens pointeurs. Un champ de destination peut être prévu pour distinguer si le message doit être réceptionné par le terminal (MS) ou par le module (SIM).

La figure 4 illustre un exemple de principe actuellement utilisé pour les technologies de type DRM ("Digital Rights Management"). L'accès à un contenu sécurisé est soumis à, premièrement l'expression de droits d'usage définis par les ayants droits et, deuxièmement à l'obtention de la clé de décryptage du contenu. Comme représenté à la figure 4, un contenu encrypté est dans un premier temps distribué, via une opération de téléchargement (E1) entre un serveur de contenu (S) et le terminal mobile (MS). Puis dans un deuxième temps, une licence associée nécessaire pour pouvoir utiliser le contenu est envoyée (E2) au terminal (MS) avec une règle dite de "forward lock", via un centre MMS-C ("Multimedia Messaging Services Center"). La licence contient des droits d'usage et la clé symétrique de décryptage du contenu. Suivant les technologies et les standards, cette licence peut être délivrée au terminal avec ou séparément du contenu. Jusqu'à présent dans le monde de la téléphonie mobile, les moyens d'authentification du terminal (MS) restent faibles et les solutions pour protéger la licence inexistantes. Ainsi la clé de chiffrement n'est pas protégée et les attaques sur le contenu sont alors facilitées. De même, l'une des approches de l'OMA Forum, illustrée à la figure 4, consiste à fournir la clé symétrique en clair au terminal mobile (MS) lors de l'envoi de la licence (E2). Cette approche est par exemple celle du "WAP-DOWNLOAD", dans laquelle le contenu est envoyé par un premier canal et la licence est fournie (E2) par un autre canal, par exemple MMS, en empêchant théoriquement le transfert de la clé vers d'autres terminaux. Ce canal permet en principe «d'empêcher» l'utilisateur de lire la clé ainsi que de transmettre la licence. Ce type de processus présente notamment les inconvénients suivants :
- -: la clé contenue dans la licence est stockée de manière permanente et en clair dans le terminal (MS),
- -: la licence est liée au terminal (MS) et non pas à l'utilisateur,
- -: la protection est aisément contournable, par exemple à l'aide d'un PC muni d'un modem GSM/GPRS.

Une autre approche consiste à fournir la clé symétrique encryptée grâce à une clé stockée en dur et non connue de l'utilisateur dans le terminal mobile (MS). Toutefois, dans cette seconde approche, la licence reste liée au terminal (MS) qui peut être trafiqué. De plus il est quasi impossible de contrôler l'intégrité de la clé et une révocation ne peut être envisagée sans rendre le terminal mobile (MS) inutilisable.

Le procédé selon l'invention permet la sécurisation des échanges de données entre un module d'identité (SIM) tel qu'une carte SIM ou USIM par exemple et un terminal (MS). Pour cela, une étape d'authentification du terminal par ledit module d'identité (SIM) est réalisée, de manière à vérifier que le terminal (MS) utilisé est bien un terminal de confiance. Le terminal (MS) doit pouvoir s'identifier auprès du module d'identité (SIM) à l'aide d'une clé symétrique ou asymétrique. Si une clé symétrique est utilisée, elle doit être stockée à la fois dans une mémoire du terminal et dans une mémoire du module d'identité (SIM). Si on utilise des clés asymétriques, c'est-à-dire au moins une clé publique Kp et au moins une clé privée associée, seule la clé privée Ks doit être stockée dans le terminal. La clé publique Kp est mémorisée dans une mémoire du module d'identité (SIM). Selon une variante de réalisation avec clés asymétriques, l'authentification entre module d'identité (SIM) et terminal (MS) se fait à l'aide d'une clé publique Kp stockée dans une mémoire du module d'identité (SIM) et d'une clé privée Ks associée stockée dans une mémoire du terminal (MS). La clé publique asymétrique Kp et la clé privée asymétrique Ks sont complémentaires. Ce mécanisme d'authentification peut être aussi utilisé pour la toute première authentification (23), effectuée lors de l'initialisation. En variante, la clé publique Kp et la clé privée Ks sont remplacées pour la première authentification par une clé symétrique.

Dans un mode de réalisation de l'invention, les clés ou des moyens d'authentification analogues sont fournis au moins au module d'identité (SIM) par une transmission sur un réseau de radiotéléphonie mobile lors d'une étape d'initialisation ou lors d'une étape de mise à jour. La transmission de tels moyens d'authentification s'effectue sur l'initiative du réseau, dans des conditions de sécurisation où les systèmes de communication sont considérés comme des systèmes de confiance, par exemple en communication avec un serveur OTA ("Over The Air") sécurisé (SS). Comme illustré à la figure 1, une ou plusieurs clés d'authentification peuvent éventuellement être transmises (21) au module d'identité (SIM) lors d'une demande d'initialisation (20) de clé sur l'initiative du serveur OTA sécurisé (SS). Au moins une clé d'authentification peut par exemple correspondre à une clé déjà présente dans le terminal (MS). Au moins une caractéristique du terminal (MS), par exemple le code IMEI ou encore le débit maximal théorique depuis le terminal, est également transmise (22) au module d'identité (SIM) par le serveur OTA (SS). Une étape (23) dite de première authentification du terminal (MS) par le module d'identité (SIM) est réalisée par l'intermédiaire de la clé d'authentification du terminal (MS). Cette première étape d'authentification (23) s'accompagne d'un contrôle (24) de caractéristique(s) du terminal (MS), par exemple le code IMEI, effectué par le module (SIM). Ceci permet au module (SIM) de s'assurer que le terminal (MS) est un terminal de confiance. Le module d'identité (SIM) ne doit en effet fournir une clé de décryptage ou analogue qu'aux terminaux (MS) dans lesquels il a confiance. Dans une autre variante de réalisation, l'initialisation peut se dérouler sans l'usage de clé(s) d'initialisation.

Pour permettre cette transmission de moyens d'authentification, le module d'identité (SIM) doit être de type "pro-actif", c'est-à-dire équipé de moyens pour envoyer des commandes au terminal (MS) pour que celui-ci les exécute. A défaut, un mécanisme de "pulling" peut être mis en oeuvre, c'est-à-dire que le terminal (MS) va interroger périodiquement le module d'identité (SIM) afin de s'assurer que le module (SIM) n'a rien à lui transmettre.

Une clé dite de confiance, par exemple effaçable et fonctionnant comme une clé de session, est générée (25) à partir d'un algorithme de génération de clé du module (SIM). Cette clé de confiance est destinée au terminal (MS) et au module d'identité (SIM) dans le but de crypter les données échangées entre le module d'identité (SIM) et le terminal (MS). Cette clé de confiance est mémorisée à la fois dans le module d'identité (SIM) et dans le terminal (MS). Lors des demandes de mise à jour de(s) clé(s), le module d'identité (SIM) génère au moins une nouvelle clé d'authentification pour les prochaines authentifications entre terminal (MS) et module d'identité (SIM). Dans le cas d'une clé asymétrique, après avoir mémorisé dans une de ses mémoires la clé publique Kp, le module d'identité (SIM) transmet (26) au terminal (MS) la clé privée Ks associée. Cette transmission (26) est sécurisée dans la mesure où la nouvelle clé privée Ks est cryptée avec la clé de confiance. Dans une variante de réalisation, ladite clé de confiance peut être une clé de chiffrement/déchiffrement symétrique. Pour le cas où une clé symétrique d'authentification est générée, la clé de confiance peut être par exemple analogue ou identique à la clé symétrique servant à l'authentification. Dans un mode de réalisation de l'invention, lorsque le terminal (MS) a bien répondu à un critère d'authentification (23), de contrôle (24) ou à ces deux critères (23, 24) et a ensuite bien reçu dans une mémoire la ou les clés transmise(s), celui-ci peut renvoyer par exemple au module d'identité (SIM) un message d'acquittement (27). Puis de la même façon, le module d'identité (SIM) renvoie au serveur OTA (SS) du réseau un message d'acquittement (28).

Ainsi, comme illustré à la figure 1, le réseau peut envoyer un message (20) au module d'identité (SIM) en lui fournissant (21) une clé d'initialisation, par exemple symétrique, lui permettant d'authentifier le terminal (MS) et/ou de crypter les échanges avec le terminal (MS). Le module d'identité (SIM) peut alors initialiser le transfert d'une nouvelle clé en utilisant cette clé d'initialisation (23) pour authentifier le terminal (MS) et /ou le module d'identité (SIM) ou encore pour crypter les échanges. Cette initialisation peut également passer par le contrôle d'éventuelles caractéristiques du terminal (MS) comme des clés d'initialisation et des certificats d'initialisation présents dans le terminal (MS). De plus, des caractéristiques du terminal (MS) vérifiables par le réseau, par exemple l'IMEI ou le débit maximum du terminal, peuvent également être transmises au module (SIM) pour que ce dernier effectue un contrôle supplémentaire sur le terminal (MS).

Des étapes de réinitialisation, réactivation, identiques ou similaires à l'étape d'initialisation peuvent bien entendu être effectuées dans le procédé selon l'invention. Dans un mode de réalisation de l'invention, ladite étape d'initialisation peut être effectuée après une répudiation de clé, une expiration de la durée de validité de clé ou lors de l'initialisation du module d'identité, par exemple en usine.

L'étape d'authentification peut consister notamment, dans un premier temps, à appliquer à un ou plusieurs algorithmes mémorisés dans le terminal une clé d'authentification symétrique ou asymétrique mémorisée dans le terminal (MS). De la même façon, dans le module d'identité (SIM), on peut appliquer à un ou plusieurs algorithmes mémorisés dans ledit module (SIM) la clé associée, symétrique ou asymétrique, mémorisée dans le module (SIM). La réponse produite dans le terminal (MS) est par exemple mémorisée dans le terminal puis transmise (11) au module d'identité (SIM), comme illustré à la figure 2. Cette réponse est comparée (12) avec celle produite dans le module (SIM). Si les réponses correspondent, alors le terminal (MS) a passé un premier test indiquant qu'il peut être éventuellement considéré comme un terminal de confiance. Si le contrôle (24) d'une caractéristique spécifique telle que par exemple l'IMEI confirme également que le terminal est bien celui auquel on peut faire "confiance", des échanges de données (13) pourront être effectués, par exemple des échanges de contenus uniquement accessibles par abonnement et transmis via le réseau radio. Dans l'exemple de la figure 2, l'étape d'authentification peut être initiée par une requête (10) de la part du module d'identité (SIM). Dans d'autres modes de réalisation, l'authentification peut aussi être initiée par le terminal (MS).

Comme les terminaux (MS) ne sont pas conçus pour résister dans le temps aux attaques, la durée de vie d'une clé est préférentiellement limitée. Dans le module (SIM) comme dans le terminal (MS) est effectuée une procédure de comparaison de la date limite de validité d'une clé avec la date courante, pour permettre le cas échéant de déclencher une mise à jour. Dans un mode de réalisation de l'invention, la durée de vie des clés stockées dans le terminal (MS) et le module d'identité (SIM) est relativement brève, limitée par une échéance déterminée synonyme de fin de validité. Un mécanisme de mise à jour de ces clés, par exemple à intervalle régulier, permet de s'affranchir des problèmes de protection des terminaux (MS) dans la durée.

L'invention va à présent être décrite en liaison avec les figures 3 et 5.

Le principe de mise à jour consiste à bénéficier de la co-localisation du module d'identité (SIM) et du terminal (MS). Dans un premier temps, considérons que le module d'identité (SIM) et que le terminal (MS) possèdent une clé symétrique commune qui leur permet de s'authentifier. Avant la fin de la validité de la clé, le terminal (MS) initie avec le module d'identité (SIM) ou vice-versa une mise à jour de cette clé. Dans l'exemple de la figure 3, la demande de mise à jour (30) est initiée par le module d'identité (SIM). Le module d'identité (SIM) est alors en charge de générer la nouvelle clé dite clé actualisée, de la stocker et de la transmettre au terminal (MS). La génération de cette clé actualisée est réalisée par un algorithme d'actualisation dudit module (SIM) prenant en compte une information, par exemple la date de validité de l'ancienne clé valide partagée. Lors de cette mise à jour, le terminal (MS) et éventuellement ledit module (SIM) s'authentifient (31) grâce à l'ancienne clé valide partagée. Dans un mode de réalisation de l'invention, le stockage dans une mémoire du module d'identité (SIM) de la clé actualisée peut s'effectuer par remplacement pur et simple de l'ancienne clé. Un identifiant du terminal (MS) et/ou du module (SIM), par le biais d'un certificat ou non, peut être utilisé lors de cette phase pour faciliter l'administration du système et l'authentification du terminal (MS) et du module d'identité (SIM). De plus, l'échange de la clé actualisée (33) se fait en cryptant la clé actualisée. Ce cryptage peut reposer sur l'usage de la clé partagée pour le cryptage ou encore grâce à la génération d'une clé de session (32), réalisée après ladite authentification entre terminal (MS) et le module d'identité (SIM). Aucun échange avec le réseau n'est effectué lors d'une telle mise à jour, le module d'identité jouant le rôle "d'entité de certification".

Dans un mode de réalisation de l'invention, la génération d'une clé dite de confiance, telle une clé de session ou analogue, s'effectue dans le module d'identité (SIM), la clé de confiance étant ensuite mémorisée dans ledit module (SIM). Ladite clé de confiance est ensuite transmise au terminal (MS) et mémorisée dans le terminal (MS). Dans une autre variante, la clé est générée à la fois dans le terminal (MS) et le module (SIM). La mise à jour peut s'achever par un essai de vérification comprenant une transmission en retour de la part du terminal (MS) d'au moins une des données transmises par le module d'identité (SIM) lors de la mise à jour ou bien une donnée représentative de la bonne réception des informations transmises par le module d'identité (SIM). Par exemple, lorsque le terminal (MS) a bien reçu et mémorisé ladite clé actualisée envoyée (33) depuis le module d'identité (SIM), celui-ci renvoie au module d'identité (SIM) un message d'acquittement (34).

La sécurisation permise par le procédé selon l'invention permet de résoudre la problématique rencontrée dans des cas tels que la technologie DRM. La figure 4 illustre schématiquement le manque de sécurisation lors des échanges de contenu dans les méthodes de l'art antérieur, par exemple entre un terminal mobile et une carte SIM. Dans un premier temps, le terminal (MS) contrôle (E3) simplement les règles d'usage du contenu détenu par la carte SIM. Puis la carte SIM accorde une permission (E4) de "jouer" le contenu et un accord de transfert de la clé de décryptage. Ensuite, la carte SIM transmet la clé de décryptage en clair au terminal (MS). Dans ce type de méthode, la fourniture de données théoriquement non accessibles par l'utilisateur est ouverte à des terminaux tels qu'un PC muni d'un lecteur de carte à puce. Par ailleurs, si les échanges ne sont pas cryptés, l'utilisation d'une sonde permet également de prendre connaissance de données confidentielles. Le procédé selon l'invention, avec une véritable étape d'authentification du terminal (MS) par le module d'identité (SIM) et un cryptage des échanges, assure une sécurisation fiable des échanges pour éviter de telles failles.

Dans un mode de réalisation de l'invention, il est possible de révoquer la clé associée au terminal (MS). La répudiation de la clé peut être réalisée sur l'initiative du module d'identité (SIM) ou du réseau, et éventuellement par le terminal (MS). Le principe consiste à répudier la clé dans le module d'identité (SIM) qui informe éventuellement, grâce à un programme mémorisé dans ledit module (SIM), le réseau et le terminal (MS) de cette répudiation. La révocation comprend l'effacement d'au moins la clé à répudier associée au terminal (MS) dans une mémoire dudit module d'identité (SIM). Ainsi, si le terminal (MS) souhaite répudier la clé, dans le cas par exemple où il détecte que son OS a été mis à jour, il en informe le module d'identité (SIM) qui éventuellement en informe le réseau, grâce aux mécanismes classiques OTA sécurisé. Si le réseau souhaite répudier la clé, dans le cas par exemple où il détecte que des caractéristiques du terminal (MS) ont changé, telles l'IMEI ou encore le débit maximal théorique depuis le terminal (MS), le réseau en informe le module d'identité (SIM) grâce aux mécanismes classiques OTA sécurisé. Ensuite, le module d'identité (SIM) en informe éventuellement le terminal (MS). Si le module d'identité (SIM) souhaite répudier la clé, elle en informe éventuellement le terminal (MS) et éventuellement le réseau. Une alternative peut être l'effacement de la clé d'authentification et de cryptage dans le terminal (MS) et/ou le module (SIM). Dès lors, le module d'identité (SIM) ne pourra plus authentifier le terminal (MS) et une réinitialisation sera nécessaire.

Dans un mode de réalisation de l'invention, le module d'identité (SIM) comporte des moyens pour mémoriser au moins une clé d'authentification, une clé de chiffrement ainsi qu'au moins deux algorithmes. Le module (SIM) peut également avoir les moyens de stocker la clé de chiffrement ainsi que l'algorithme de cryptage avec le terminal (MS). Ces moyens peuvent être par exemple une mémoire de type EEPROM, de type ROM ou une combinaison des deux. Le module d'identité (SIM) comporte aussi des moyens de calcul pour exécuter au moins une étape consistant à appliquer ladite clé d'authentification à l'algorithme mémorisé dans le module d'identité (SIM), et des moyens d'activation d'un algorithme d'actualisation de ladite clé d'authentification. Le module d'identité (SIM) comprend aussi des moyens d'initier une révocation et des moyens de révocation pour révoquer la clé d'authentification associée au terminal (MS), des moyens de mémorisation d'une caractéristique spécifique du terminal (MS) et des moyens d'activation d'un algorithme d'actualisation de la clé d'authentification associé au terminal (MS). Le module d'identité (SIM) peut en outre, dans un mode de réalisation de l'invention, correspondre à une carte à puce pro-active.

Les moyens de révocation peuvent permettre soit une procédure d'effacement de la zone mémoire contenant la clé d'authentification, soit le positionnement d'un bit associé à cette zone. Dans ce dernier cas, le bit sera lu systématiquement à chaque demande d'accès à cette zone et selon sa valeur, l'accès sera autorisé (clé valide) ou refusée (clé révoquée).

Après une répudiation, une expiration de la durée de vie de la clé ou lors de l'initialisation, l'initiative d'activation des clés est donnée au réseau. Le réseau décide d'initialiser ou de réinitialiser le modèle de confiance lorsqu'il estime que le terminal (MS) est un terminal de confiance. Le réseau envoie un message au module d'identité (SIM) grâce aux mécanismes classiques OTA sécurisé basés sur, par exemple, les mécanismes prévus par la norme GSM 03.48 pour indiquer que ledit module (SIM) peut échanger une clé avec le terminal (MS). Le message peut tout aussi bien être envoyé par le réseau aux deux autres entités (SIM, MS). L'initialisation ou la réactivation peuvent être réalisées sans protection des échanges entre le module (SIM) et le terminal (MS). Mais elle peut également reposer sur l'usage d'une clé d'initialisation qui serait présente dans le terminal (MS) et fournie au module d'identité (SIM) par un mécanisme OTA sécurisé.

Dans l'invention, le nombre de clés pouvant être utilisé n'est nullement limité. Plusieurs clés peuvent bien entendu être utilisées et générées. Il est ainsi possible d'utiliser une clé pour authentifier le terminal (MS) ainsi qu'une clé pour crypter les échanges, voire une clé par type d'échange à crypter. De même, l'usage de clés asymétriques au lieu de clés symétriques est possible.

Un des avantages du procédé selon l'invention est la prise en compte de manière flexible et économique du problème fondamental de l'authentification du terminal vis-à-vis du module (SIM) : au début du dialogue entre le module d'identité (SIM) et le terminal (MS), le module d'identité (SIM) doit avoir des preuves que le terminal est bien celui qu'il prétend être, et qu'il met bien en oeuvre les mécanismes attendus. Au lieu de se baser sur un mécanisme statique de certification du terminal, le procédé décrit propose une certification dynamique du terminal, utilisant le réseau comme un outil de certification dynamique, car fonctionnelle : si le terminal est bien celui qu'il prétend être, il doit être capable de passer un certain nombre de tests avec succès, en particulier impliquant des échanges avec le module d'identité (SIM) et sous le contrôle de ce module (SIM). Il devient alors très difficile de créer un simulateur de terminal pour avoir accès à la clé d'authentification/chiffrement de l'environnement sécurisé, car il faudra que ce terminal réalise correctement toutes les fonctions testées, ce qui sera très difficile à réaliser en pratique.

Un autre des avantages de l'invention par rapport aux techniques existantes est que même s'il apparaît que certains terminaux (MS) non sûrs ont cassé le mécanisme précédent et permis d'avoir accès à du contenu sécurisé à des tiers non autorisés, il est très facile de révoquer ces terminaux (MS), car le module d'identité (SIM) reste l'élément maître du dispositif et que le réseau peut lui envoyer un ordre d'invalidation à tout moment.

Un autre avantage de l'invention réside dans le couplage entre le module d'identité (SIM) et le terminal (MS) qui peut être utilisé pour protéger des données connues et modifiables de l'utilisateur, par exemple, le «login» et le mot de passe d'accès à la banque de l'utilisateur, pour stocker des données que l'utilisateur ne doit pas pouvoir modifier, par exemple des droits d'utilisation d'un logiciel ou d'une musique. Ce couplage peut également s'appliquer pour le stockage de données que l'utilisateur ne doit pas pouvoir connaître, par exemple stockage d'une clé permettant de décrypter une musique avant son exécution. Les fonctions transmises au terminal (MS) par le module d'identité (SIM) peuvent être des fonctions de cryptographie, de porte-monnaie électronique ou encore des fonctions de stockage et d'accès à des données.

Les applications de l'invention sont multiples. Ainsi, dans une application DRM, la carte SIM peut être utilisée pour stocker des droits d'utilisation et d'éventuelles clés de décryptage de contenu. Lorsqu'un applicatif du terminal (MS) aura besoin de l'une de ses clés, il pourra interroger le terminal (MS) qui identifiera l'application et qui s'authentifiera auprès de la carte SIM. Dès lors, la carte SIM faisant confiance au terminal (MS), elle pourra contrôler les droits d'usages des clés par l'applicatif puis transmettre les clés nécessaires à l'applicatif. La transmission de ces clés pourra être cryptée, grâce à l'utilisation d'une clé de session ou grâce à l'utilisation d'une clé prévue à cet effet ou encore grâce à l'utilisation de la clé de chiffrement.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé d'établissement et de gestion d'un modèle de confiance entre un module d'identité (SIM) et un terminal radio (MS), **caractérisé en ce qu'**il comporte :
- une étape d'authentification du terminal (MS) par ledit module d'identité (SIM), ladite étape d'authentification étant réalisée par l'intermédiaire de moyens d'authentification fournis, soit audit module d'identité (SIM) par un réseau de radiotéléphonie mobile lors d'une étape dite d'initialisation ou lors d'une étape dite de mise à jour, soit audit terminal (MS) par le module d'identité (SIM),
- une étape de contrôle par ledit module (SIM) d'au moins une caractéristique spécifique du terminal (MS), ladite caractéristique spécifique étant préalablement transmise par radiotéléphonie audit module, depuis un serveur sécurisé (SS) dudit réseau de radiotéléphonie mobile.

2. Procédé selon la revendication 1, dans lequel la durée de vie desdits moyens d'authentification du terminal (MS) présents dans le module d'identité (SIM) est limitée par une échéance déterminée, lesdits moyens d'authentification étant constitués d'au moins une clé d'authentification.

3. Procédé selon la revendication 1 ou 2, dans lequel ledit module d'identité (SIM) est une carte à puce de type SIM ou une carte USIM pour réseaux de troisième génération ou une carte équivalente comportant dans une mémoire des données représentatives d'abonnement.

4. Procédé selon l'une des revendications 1 à 3, dans lequel le module d'identité (SIM) maintient une relation de confiance avec le terminal radio (MS) en générant des moyens d'authentification puis en fournissant ces moyens d'authentification au terminal radio (MS) grâce à des mécanismes d'échange sécurisés et reposant sur des moyens d'authentification initialement disponibles du terminal radio (MS).

5. Procédé selon l'une des revendications 1 à 4, comportant lors de ladite étape d'initialisation ou de mise à jour une étape de génération, réalisée au moins par ledit module d'identité (SIM), d'une clé dite de confiance, ladite clé de confiance étant utilisée par ledit module (SIM) pour crypter au moins des données échangées entre le module d'identité (SIM) et le terminal (MS).

6. Procédé selon l'une quelconque des revendications 2 à 5, dans lequel ladite étape d'initialisation desdits moyens d'authentification est effectuée, à l'initiative du réseau de radiotéléphonie, après une répudiation de clé initiée par ledit module (SIM) ou le réseau de radiotéléphonie mobile ou le terminal radio (MS), une expiration de la durée de validité de clé ou bien lors de l'initialisation du module d'identité (SIM).

7. Procédé selon l'une des revendications 1 à 6, dans lequel ladite étape d'authentification comprend notamment les étapes suivantes :
- une étape d'utilisation dans le terminal (MS) d'au moins une première clé d'authentification mémorisée dans le terminal (MS) par au moins un premier algorithme d'authentification mémorisé dans le terminal (MS), ladite première clé ayant une durée de validité limitée par une échéance déterminée,
- une étape d'utilisation par le module d'identité (SIM) d'au moins une deuxième clé mémorisée dans le module d'identité (SIM) par au moins un deuxième algorithme d'authentification mémorisé dans le module d'identité (SIM), ladite deuxième clé étant identique ou complémentaire de la première clé et associée au terminal (MS), ladite deuxième clé ayant une durée de validité limitée par ladite échéance déterminée,
- une étape de comparaison (12) dans le module d'identité (SIM) des résultats obtenus par lesdits premier et second algorithmes.

8. Procédé selon l'une quelconque des revendications 2 à 7, dans lequel l'étape d'authentification comprend l'utilisation de la dite échéance déterminée.

9. Procédé selon la revendication 7 ou 8, dans lequel ladite étape d'initialisation est initiée par un réseau de radiotéléphonie mobile et comporte également:
- la génération par le module d'identité (SIM) d'au moins une desdites première et seconde clés,
- une mémorisation dans le module d'identité (SIM) de ladite seconde clé,
- une transmission au terminal (MS), par le module d'identité (SIM), de ladite première clé, cette première clé étant cryptée par l'intermédiaire de la clé de confiance.

10. Procédé selon l'une quelconque des revendications 7 à 9, dans lequel ladite étape de comparaison (12) est effectuée entre d'une part une réponse produite par ledit premier algorithme, mémorisée dans le terminal (MS) et transmise (11) audit module d'identité (SIM) et d'autre part un résultat de réponse, mémorisé dans le module d'identité (SIM), produit par ledit second algorithme.

11. Procédé selon l'une des revendications 7 à 10, dans lequel ladite première clé est une clé privée Ks asymétrique, ladite seconde clé étant une clé publique Kp complémentaire de la première clé.

12. Procédé selon l'une des revendications 7 à 10, dans lequel ladite première clé est symétrique, ladite seconde clé mémorisée dans le module d'identité (SIM) étant identique à la première, ces clés formant une seule clé symétrique d'authentification.

13. Procédé selon l'une des revendications 7 à 12, comprenant une étape de mise à jour desdites première et seconde clés, initiée par le module d'identité (SIM) avant ladite échéance déterminée, ladite mise à jour incluant les étapes suivantes :
- authentification (31) entre le terminal (MS) et le module d'identité (SIM) à l'aide desdites première et seconde clés,
- génération par un algorithme d'actualisation du module d'identité (SIM) d'au moins une clé actualisée prenant en compte une information pour remplacer au moins l'une desdites première et seconde clés,
- mémorisation dans le module d'identité (SIM) de la clé actualisée pour remplacer ladite seconde clé,
- transmission (33) au terminal (MS) par le module d'identité (SIM) de la clé actualisée analogue de ladite première clé.

14. Procédé selon la revendication 13, dans lequel ladite mise à jour comprend en outre le contrôle d'au moins un identifiant du terminal (MS) et/ou du module d'identité (SIM).

15. Procédé selon l'une des revendications 13 ou 14, dans lequel un cryptage de clé est réalisé pour ladite transmission (33) au terminal (MS) de la clé actualisée analogue de la première clé, ledit cryptage de clé étant effectué par ladite clé de confiance.

16. Procédé selon l'une des revendications 13 à 15, dans lequel la mise à jour comprend également les étapes suivantes :
- génération (32) par le module d'identité (SIM) d'une nouvelle clé de confiance, après ladite authentification (31) entre terminal (MS) et module (SIM),
- mémorisation dans le module d'identité (SIM) de la nouvelle clé de confiance,
- transmission au terminal par le module d'identité (SIM) de la clé de confiance nouvellement générée.

17. Procédé selon l'une quelconque des revendications 13 à 16, dans lequel ladite mise à jour s'achève par un essai de vérification comprenant une transmission en retour de la part du terminal (MS) d'au moins une donnée représentative de la bonne réception des informations transmises par le module d'identité (SIM) lors de la mise à jour.

18. Procédé selon l'une quelconque des revendications 5 à 17, dans lequel ladite clé de confiance est une clé de chiffrement/déchiffrement symétrique identique à ladite clé symétrique d'authentification.

19. Procédé selon l'une quelconque des revendications 5 à 18, dans lequel ladite clé de confiance est une clé de session effaçable.

20. Procédé selon l'une quelconque des revendications 7 à 19, dans lequel une étape dite de révocation est réalisée sur l'initiative du module d'identité (SIM), du terminal (MS) ou du réseau de radiotéléphonie correspondant, ladite étape de révocation comprenant l'effacement dans une mémoire dudit module d'identité (SIM) d'au moins ladite première clé associée au terminal (MS).

21. Module d'identité (SIM) dans un terminal (MS) pour la mise en oeuvre du procédé selon l'une des revendications 1 à 20, **caractérisé en ce qu'**il comprend des moyens pour mémoriser au moins une clé d'authentification ainsi qu'au moins un algorithme d'authentification, des moyens de calcul pour exécuter au moins une étape consistant à appliquer ladite clé d'authentification audit algorithme d'authentification mémorisé dans le module d'identité (SIM), des moyens de communication, des moyens d'initier une révocation et des moyens de révocation pour révoquer ladite clé d'authentification, des moyens de mémorisation d'une caractéristique spécifique du terminal (MS), des moyens de contrôle d'au moins une caractéristique spécifique du terminal (MS) et des moyens d'activation d'un algorithme d'actualisation de ladite clé d'authentification, les moyens de communication étant aptes à fournir au moins une clé d'authentification au terminal (MS) et à recevoir des données issues d'un serveur sécurisé (SS) d'un réseau de radiotéléphonie mobile.

## Claims

1. A method for establishing and managing a trust model between an identity module (SIM) and a radio terminal (MS), **characterized in that** it comprises:
- a step of authentication of the terminal (MS) by said identity module (SIM), said authentication step being accomplished through authentication means provided either to said identity module (SIM) by a mobile radiotelephone network during a so-called initialization step or during a so-called updating step, or to said terminal (MS) by the identity module (SIM),
- a step in which said module (SIM) checks at least one specific characteristic of the terminal (MS), said specific characteristic having been previously transmitted by radiotelephone means to said module from a secure server (SS) of said mobile radiotelephone network.

2. A method according to Claim 1, wherein the lifetime of said terminal (MS) authentication means present in the identity module (SIM) is limited by a predetermined expiration, said authentication means consisting of at least one authentication key.

3. A method according to Claim 1 or 2, wherein said identity module (SIM) is a SIM type chip card or a USIM card for third generation networks or an equivalent card including subscription data held in a memory.

4. A method according to one of Claims 1 through 3, wherein the identity module (SIM) maintains a trust relationship with the radio terminal (MS) by generating authentication means, then providing said authentication means to the radio terminal (MS) using secure communication mechanisms relying on initially available authentication means of the radio terminal (MS).

5. A method according to one of Claims 1 through 4 comprising, during said initialization or updating step, a step, performed by at least said identity module (SIM), of generating a key called a trust key, said trust key being used by said module (SIM) to encrypt at least data transmitted between the identity module (SIM) and the terminal (MS).

6. A method according to any one of Claims 2 through 5, in which said initialization step of said authentication means is performed, at the instigation of the radiotelephone network, following a key repudiation initiated by said module (SIM) or the mobile radiotelephone network or the radio terminal (MS), expiration of the validity period of the key or during the initialization of the identity module (SIM).

7. A method according to one of Claims 1 through 6, in which said authentication step particularly includes the following steps:
- a step of use within the terminal (MS) of at least a first authentication key stored in memory in the terminal (MS) by at least a first authentication algorithm stored in memory in the terminal (MS), said first key having a validity period limited by a predetermined expiration,
- a step of use by the identity module (SIM) of at least a second key stored in memory in the identity module (SIM) by at least a second authentication algorithm stored in memory in the identity module (SIM), said second key being identical or complementary to the first key and associated with the terminal (MS), said second key having a validity period limited by said predetermined expiration,
- a step of comparison (12) within the identity module (SIM) of the results obtained by said first and second algorithms.

8. A method according to any one of Claims 2 through 7, in which the authentication step includes the use of said predetermined expiration.

9. A method according to Claim 7 or 8, in which said initialization step is initiated by a mobile radiotelephone network and also includes:
- the generation by the identity module (SIM) of at least one of said first and second keys,
- storage of said key in memory in the identity module (SIM),
- transmission to the terminal (MS), by the identity module (SIM), of said first key, said first key being encrypted using the trust key.

10. A method according to any one of Claims 7 through 9, in which said comparison step (12) is performed between a response produced by said first algorithm, stored in memory in the terminal (MS) and transmitted (11) to said identity module (SIM), on the one hand, and a response result stored in the identity module (SIM), produced by said second algorithm, on the other.

11. A method according to one of Claims 7 through 10, in which said first key is an asymmetric private key Ks, said second key being a public key Kp complementary to the first key.

12. A method according to one of Claims 7 through 10, in which said first key is symmetrical, said second key stored in memory in the identity module (SIM) being identical to the first, said keys constituting a single symmetrical authentication key.

13. A method according to one of Claims 7 through 12, including a step for updating said first and second keys, initiated by the identity module (SIM) before said predetermined expiration, said update including the following steps:
- authentication (31) between the terminal (MS) and the identity module (SIM) using said first and second keys,
- generation by an identity module (SIM) updating algorithm of at least one updated key employing an information item to replace at least one of said first and second keys,
- storage in memory in the identity module (SIM) of the updated key to replace said second key,
- transmission (33) to the terminal (MS) by the identity module (SIM) of the updated key similar to said first key.

14. A method according to Claim 13, in which said update also includes the checking of at least one identifier of the terminal and/or of the identity module (SIM).

15. A method according to one of Claims 13 or 14, in which key encryption is performed for said transmission (33) to the terminal (MS) of the of the updated key corresponding to the first key, said key encryption being performed by said trust key.

16. A method according to one of Claims 13 through 15, in which the update also includes the following steps:
- generation (32) by the identity module (SIM) of a new trust key, after said authentication (31) between the terminal (MS) and the module (SIM),
- storage in memory in the identity module (SIM) of the new trust key,
- transmission to the terminal by the identity module (SIM) of the newly generated trust key.

17. A method according to any one of Claims 13 through 16, in which said update concludes with a verification test comprising a return transmission on the part of the terminal (MS) of at least one datum showing successful reception of the information transmitted by the identity module (SIM) during the update.

18. A method according to any one of Claims 5 through 17, in which said trust key is a symmetrical encryption/decryption key identical to the symmetrical authentication key.

19. A method according to any one of Claims 5 through 18, in which said trust key is an erasable session key.

20. A method according to any one of Claims 7 through 19, in which one step, called the revocation step, is carried out at the instigation of the identity module (SIM), the terminal (MS) or the corresponding radiotelephone network, said revocation step comprising the erasure in a memory of said identity module (SIM) of at least said first key associated with the terminal (MS).

21. An identity module (SIM) in a terminal (MS) for implementing the method according to one of Claims 1 through 20, **characterized in that** it includes means for storing in memory at least one authentication key and at least one authentication algorithm, calculation means for performing at least one step consisting of applying said authentication key to said authentication algorithm stored in memory in the identity module (SIM), communication means, means for initiating a revocation and revocation means for revoking said authentication key, means for storing a specific characteristic of the terminal (MS) in memory, means for checking at least one specific characteristic of the terminal (MS), and means for activating an algorithm for updating said authentication key, the communication means being capable of providing at least one authentication key to the terminal (MS) and to receive data from a secure server (SS) of a mobile radiotelephone network.

## Patentansprüche

1. Verfahren zum Erstellen und Verwalten eines Vertrauensmodells zwischen einem Identitätsmodul (SIM) und einem Funkendgerät (MS), **dadurch gekennzeichnet, dass** es umfasst:
- einen Schritt der Authentifizierung des Endgeräts (MS) durch das Identitätsmodul (SIM), wobei der Authentifizierungsschritt über Authentifizierungsmittel durchgeführt wird, die entweder dem Identitätsmodul (SIM) über ein Mobilfunktelefonnetz während eines als Initialisierung bezeichneten Schritts oder während eines als Aktualisierung bezeichneten Schritts, oder dem Endgerät (SIM) durch das Identitätsmodul (SIM) bereitgestellt werden,
- einen Schritt der Kontrolle mindestens eines spezifischen Merkmals des Endgeräts (MS) durch das Modul (SIM), wobei das spezielle Merkmal dem Modul zuvor durch Funktelefonie von einem abgesicherten Server (SS) des Mobilfunktelefonnetzes übermittelt wurde.

2. Verfahren nach Anspruch 1, wobei die Lebensdauer der Authentifizierungsmittel des Endgeräts (MS), die im Identitätsmodul (SIM) vorhanden sind, durch eine bestimmte Frist begrenzt ist, wobei die Authentifizierungsmittel aus mindestens einem Authentifizierungsschlüssel bestehen.

3. Verfahren nach Anspruch 1 oder 2, wobei das Identitätsmodul (SIM) eine Chipkarte vom Typ SIM oder eine USIM-Karte für Netze der dritten Generation oder eine äquivalente Karte ist, die in einem Speicher repräsentative Abonnementsdaten aufweist.

4. Verfahren nach einem der Ansprüche 1 bis 3, wobei das Identitätsmodul (SIM) eine Vertrauensbeziehung mit dem Funkendgerät (MS) aufrechterhält, indem es Authentifizierungsmittel erzeugt, wobei diese Authentifizierungsmittel dann dem Funkendgerät (MS) durch abgesicherte und auf ursprünglich verfügbaren Authentifizierungsmitteln des Funkendgeräts (MS) beruhenden Austauschmechanismen bereitgestellt werden.

5. Verfahren nach einem der Ansprüche 1 bis 4, das während des Schritts der Initialisierung oder Aktualisierung einen zumindest von dem Identitätsmodul (SIM) durchgeführten Schritt der Erzeugung eines so genannten Vertrauensschlüssels aufweist, wobei der Vertrauensschlüssel von dem Modul (SIM) verwendet wird, um zumindest zwischen dem Identitätsmodul (SIM) und dem Endgerät (MS) ausgetauschte Daten zu verschlüsseln.

6. Verfahren nach einem der Ansprüche 2 bis 5, wobei der Schritt der Initialisierung der Authentifizierungsmittel auf Initiative des Funktelefonnetzes nach einer Zurückweisung des vom Modul (SIM) oder dem Mobilfunktelefonnetz oder dem Funkendgerät (MS) initiierten Schlüssels, einem Ablauf der Gültigkeitsdauer des Schlüssels oder während der Initialisierung des Identitätsmoduls (SIM) durchgeführt wird.

7. Verfahren nach einem der Ansprüche 1 bis 6, wobei der Authentifizierungsschritt vor allem die folgenden Schritte umfasst:
- einen Schritt der Benutzung im Endgerät (MS) mindestens eines in dem Endgerät (MS) gespeicherten ersten Authentifizierungsschlüssels durch mindestens einen im Endgerät (MS) gespeicherten ersten Authentifizierungsalgorithmus, wobei der erste Schlüssel eine durch eine bestimmte Frist begrenzte Gültigkeitsdauer hat,
- einen Schritt der Benutzung durch das Identitätsmodul (SIM) mindestens eines in dem Identitätsmodul (SIM) gespeicherten zweiten Authentifizierungsschlüssels durch mindestens einen im Identitätsmodul (SIM) gespeicherten zweiten Authentifizierungsalgorithmus, wobei der zweite Schlüssel mit dem ersten Schlüssel identisch ist oder diesen dem Endgerät (MS) zugeordneten Schlüssel ergänzt, wobei der zweite Schlüssel eine durch die bestimmte Frist begrenzte Gültigkeitsdauer hat,
- einen Schritt des Vergleichs (12) der von dem ersten und zweiten Algorithmus ermittelten Ergebnisse im Identitätsmodul (SIM).

8. Verfahren nach einem der Ansprüche 2 bis 7, wobei der Authentifizierungsschritt die Verwendung der bestimmten Frist umfasst.

9. Verfahren nach Anspruch 7 oder 8, wobei der Initialisierungsschritt von einem Mobilfunktelefonnetz initiiert wird und ebenfalls aufweist:
- das Erzeugen von mindestens einem ersten und zweiten Schlüssel durch das Identitätsmodul (SIM),
- ein Speichern des zweiten Schlüssels in dem Identitätsmodul (SIM),
- eine Übertragung des ersten Schlüssels an das Endgerät (MS) durch das Identitätsmodul (SIM), wobei dieser erste Schlüssel vom Vertrauensschlüssel verschlüsselt wird.

10. Verfahren nach einem der Ansprüche 7 bis 9, wobei der Vergleichsschritt (12) zwischen einerseits einer Antwort, die von dem ersten Algorithmus bereitgestellt, im Endgerät (MS) gespeichert und an das Identitätsmodul (SIM) übertragen (11) wird, und andererseits einem Antwortergebnis, das in dem Identitätsmodul (SIM) gespeichert und von dem zweiten Algorithmus bereitgestellt wird, durchgeführt wird.

11. Verfahren nach einem der Ansprüche 7 bis 10, wobei der erste Schlüssel ein privater asymmetrischer Ks-Schlüssel ist, wobei der zweite Schlüssel ein öffentlicher Kp-Schlüssel ist, der den ersten Schlüssel ergänzt.

12. Verfahren nach einem der Ansprüche 7 bis 10, wobei der erste Schlüssel symmetrisch ist, wobei der zweite, im Identitätsmodul (SIM) gespeicherte Schlüssel mit dem ersten identisch ist, wobei diese Schlüssel einen einzigen symmetrischen Authentifizierungsschlüssel bilden.

13. Verfahren nach einem der Ansprüche 7 bis 12, das einen Schritt der Aktualisierung des ersten und zweiten Schlüssels umfasst, der von dem Identitätsmodul (SIM) vor der bestimmten Frist initiiert wird, wobei die Aktualisierung die folgenden Schritte umfasst:
- Authentifizieren (31) zwischen dem Endgerät (MS) und dem Identitätsmodul (SIM) mit Hilfe des ersten und zweiten Schlüssels,
- Erzeugen mindestens eines aktualisierten Schlüssels durch einen Aktualisierungsalgorithmus des Identitätsmoduls (SIM), wobei eine Information berücksichtigt wird, um mindestens einen der ersten und zweiten Schlüssel zu ersetzen,
- Speichern des aktualisierten Schlüssels im Identitätsmodul (SIM), um den zweiten Schlüssel zu ersetzen,
- Übertragen (33) des aktualisierten, zum ersten Schlüssel analogen Schlüssels an das Endgerät (MS) durch das Identitätsmodul (SIM).

14. Verfahren nach Anspruch 13, wobei die Aktualisierung weiterhin die Kontrolle mindestens einer Kennung des Endgeräts (MS) und/oder des Identitätsmoduls (SIM) umfasst.

15. Verfahren nach einem der Ansprüche 13 oder 14, wobei eine Schlüsselverschlüsselung des aktualisierten, zum ersten Schlüssel analogen Schlüssels für die Übertragung (33) an das Endgerät (MS) durchgeführt wird, wobei die Schlüsselverschlüsselung vom Vertrauensschlüssel durchgeführt wird.

16. Verfahren nach einem der Ansprüche 13 bis 15, wobei die Aktualisierung die folgenden Schritte umfasst:
- Erzeugen (32) eines neuen Vertrauensschlüssels durch das Identitätsmodul (SIM) nach der Authentifizierung (31) zwischen dem Endgerät (MS) und dem Modul (SIM),
- Speichern des neuen Vertrauensschlüssels im Identitätsmodul (SIM),
- Übertragen des neu erzeugten Vertrauensschlüssels an das Endgerät durch das Identitätsmodul (SIM).

17. Verfahren nach einem der Ansprüche 13 bis 16, wobei die Aktualisierung durch einen Verifizierungstest beendet wird, der eine Rückwärtsübertragung vom Endgerät (MS) mindestens einer Angabe umfasst, die für den ordnungsgemäßen Empfang der vom Identitätsmodul (SIM) bei der Aktualisierung übertragenen Informationen repräsentativ ist.

18. Verfahren nach einem der Ansprüche 5 bis 17, wobei der Vertrauensschlüssel ein symmetrischer Chiffrierungs / Dechiffrierungsschlüssel ist, der mit dem symmetrischen Authentifizierungsschlüssel identisch ist.

19. Verfahren nach einem der Ansprüche 5 bis 18, wobei der Vertrauensschlüssel ein löschbarer Sitzungsschlüssel ist.

20. Verfahren nach einem der Ansprüche 7 bis 19, wobei ein als Widerruf bezeichneter Schritt auf Veranlassung des Identitätsmoduls (SIM), des Endgeräts (MS) oder des entsprechenden Funktelefonnetzes durchgeführt wird, wobei der Widerrufsschritt das Löschen mindestens des ersten, dem Endgerät (MS) zugeordneten Schlüssels in einem Speicher des Identitätsmoduls (SIM) umfasst.

21. Identitätsmodul (SIM) in einem Endgerät (MS) für die Umsetzung des Verfahrens nach einem der Ansprüche 1 bis 20, **dadurch gekennzeichnet, dass** es Mittel umfasst, um mindestens einen Authentifizierungsschlüssel sowie mindestens einen Authentifizierungsalgorithmus zu speichern, Rechenmittel, um mindestens einen Schritt durchzuführen, der darin besteht, den Authentifizierungsschlüssel auf den im Identitätsmodul (SIM) gespeicherten Authentifizierungsalgorithmus anzuwenden, Kommunikationsmittel, Mittel, um einen Widerruf zu veranlassen und Widerrufsmittel, um den Authentifizierungsschlüssel zu widerrufen, Speichermittel eines spezifischen Merkmals des Endgeräts (MS), Kontrollmittel mindestens eines spezifischen Merkmals des Endgeräts (MS) und Aktivierungsmittel eines Aktualisierungsalgorithmus des Authentifizierungsschlüssels, wobei die Kommunikationsmittel imstande sind, mindestens einen Authentifizierungsschlüssel an das Endgerät (MS) zu liefern und Daten von einem abgesicherten Server (SS) des Mobilfunktelefonnetzes zu empfangen.
